# FASCICULE DE BREVET EUROPEEN

(11) **EP 0 621 416 B1**
(45) Date de publication et mention de la délivrance du brevet: **16.07.1997**
(21) Numéro de dépôt: 94400878.8
(22) Date de dépôt: 22.04.1994
(51) Int. Cl.: F16F 7/12, B61F 19/04, B61F 1/08, B60R 19/18, B62D 21/15, E01F 15/00

(54) **Dispositif d'amortissement de choc**
Stossdämpfende Vorrichtung
Shock-damping device

(30) Priorité: 23.04.1993 FR 9304823
(43) Date de publication de la demande: 26.10.1994
(73) Titulaire: GEC ALSTHOM TRANSPORT SA, 75016 Paris (FR)
(72) Inventeur: Guardiola, Pierre-Henri, F-90700 Chatenois les Forges (FR); Iv, Van-Tha, F-90300 Cravanche (FR); Metzger, Albert, F-68500 Hartmannswiller (FR); Cleon, Louis-Marie, c/o Gec Alstrom Transport Sa, F-92086 Paris La Defense (FR); Dannawi, Marwan, c/o Ecole Centrale de Nantes, F-44072 Nantes Cedex 03 (FR)
(74) Mandataire: Fournier, Michel

(56) Documents cités:
- EP-A- 0 467 193
- EP-A- 0 517 377
- CA-A- 1 238 809
- DE-A- 4 224 489
- DE-B- 1 173 925
- REVUE GENERALE DES CHEMINS DE FER, no.11, Novembre 1993, PARIS FR pages 45 - 57 L.-M. CLEON '3. Résistance passive Application au TGV 2N'

## Description

La présente invention concerne un dispositif d'amortissement de choc.

On connaît des dispositifs d'amortissement de choc constitués par des systèmes à déformation réversible basés sur une dégradation de l'énergie par frottement sec ou visqueux. Ainsi, dans le domaine ferroviaire ils sont installés dans les tampons et dans les cartouches des attelages automatiques. Ces systèmes présentent l'inconvénient d'avoir un bas niveau d'absorption d'énergie, environ 50 kJ par organe.

Un autre dispositif amortisseur de choc est constitué par le bouclier placé sur une motrice de train, en particulier pour train à grande vitesse. Un tel bouclier est constitué par une structure en nid d'abeilles ou en tubes travaillant en compression. Il s'agit d'une pièce rapportée et encombrante qui présente l'inconvénient de ne pas intervenir dans la transmission des efforts longitudinaux dans le châssis. En outre, cette pièce ne protège que le conducteur.

La sécurité des voyageurs d'un train en cas de collision est actuellement prise en compte de manière très sérieuse. En effet, l'augmentation de la vitesse de roulement des trains accroît les risques en cas d'accident. Une série d'accidents récents à démontré que les progrès réalisés dans le domaine de la signalisation n'écartaient pas tous les risques de collision.

Il s'avère donc nécessaire de disposer d'un dispositif d'amortissement de choc plus efficace que les dispositifs existant actuellement. Ce dispositif doit, en cas de choc, provoquer un écrasement selon l'axe principal de l'engin de traction pour éviter que l'engin ne se mette de travers sur la voie. Il doit également ne pas être trop lourd pour respecter les limites de poids par essieu imposées pour les trains. Il doit aussi être de faible encombrement, le gain de place étant très recherché aussi bien dans les engins de traction que dans les voitures de voyageurs.

Le document EP 0 467 193 décrit un dispositif d'amortissement de choc conforme aux préambule de la revendication 1.

La présente invention permet de pallier les inconvénients de l'art antérieur et de satisfaire les exigences d'efficacité, de poids et d'encombrement. Elle s'applique particulièrement bien au domaine ferroviaire où la quantité d'énergie à absorber en cas de choc peut être considérable. Elle peut cependant s'appliquer à d'autres domaines afin d'amortir le choc éventuel entre un engin mobile et un obstacle ou entre deux engins mobiles (voitures automobiles, ascenceurs, etc...).

L'efficacité du dispositif proposé réside dans la forme particulière que présente sa section dans la direction du choc.

L'invention a donc pour objet un dispositif d'amortissement de choc, comprenant au moins un élément mécanique absorbant par sa déformation l'énergie engendrée par un choc se produisant selon une direction donnée, caractérisé en ce que ledit élément est constitué de plaques minces dont les normales sont perpendiculaires à la direction du choc, sa section située dans un plan perpendiculaire à la direction du choc ayant la forme d'au moins deux triangles ayant chacun un sommet commun, et en ce que l'épaisseur des plaques est calculée de manière à ce que sous l'effet d'un choc l'élément s'écrase en accordéon par flambage localisé des plaques.

Ledit élément peut comporter des renforts disposés entre les deux triangles et dans des plans perpendiculaires à la direction du choc.

Ledit élément peut comporter des zones embouties. Ces zones permettent d'initier la déformation et également d'abaisser la valeur de l'effort de déformation.

Les deux triangles peuvent être des triangles identiques et opposés par leurs sommets.

Ledit élément peut comporter des plaques minces de fermeture des angles compris entre les deux triangles. L'élément peut être en acier.

La section de l'élément peut présenter des parties ayant des coefficients de limite élastique différents.

L'élément peut être constitué de plaques minces pliées et soudées entre elles pour former ladite section. Ceci présente l'avantage de faciliter sa réalisation.

L'invention a aussi pour objet un véhicule, caractérisé en ce qu'il comporte dans son ossature au moins un dispositif d'amortissement de choc tel que défini ci-dessus, le dispositif étant placé entre des parties indéformables de l'ossature.

Le dispositif d'amortissement de choc est avantageusement inséré dans le châssis du véhicule.

Le châssis comprenant des brancards et des longrines, le dispositif peut comprendre des éléments se substituant aux brancards et aux longrines du châssis.

Le châssis peut inclure un dispositif d'amortissement de choc à l'avant du véhicule, ce dispositif comprenant un élément central placé selon l'axe du véhicule et deux éléments latéraux disposés pour former un V pointant vers l'avant du véhicule.

Ces éléments latéraux peuvent avoir des sections transversales en forme de rectangle creux à une seule diagonale.

Si le véhicule est un véhicule ferroviaire possédant une traverse arrière et une traverse pivot correspondant au bogie adjacent, le dispositif peut être inséré dans le châssis entre la traverse arrière et ladite traverse pivot.

L'invention sera mieux comprise et d'autres détails et particularités apparaîtront à la lecture de la description qui va suivre, donnée à titre non limitatif, accompagnée des dessins annexés parmi lesquels:
- la figure 1 représente un dispositif d'amortissement de choc selon l'invention, ce dispositif étant constitué d'un seul élément longitudinal,
- la figure 2 représente une variante de réalisation du dispositif d'amortissement de choc selon l'invention,
- la figure 3 représente une variante de dispositif d'amortissement de choc selon l'invention,
- la figure 4 représente un châssis de véhicule ferroviaire incorporant des dispositifs d'amortissement de choc selon l'invention,
- la figure 5 est une vue partielle du châssis du véhicule ferroviaire de la figure 4 selon la coupe V-V,
- la figure 6 est une vue partielle du châssis du véhicule ferroviaire de la figure 4 selon la coupe VI-VI,
- la figure 7 est une vue du châssis du véhicule ferroviaire de la figure 4 selon la coupe VII-VII.

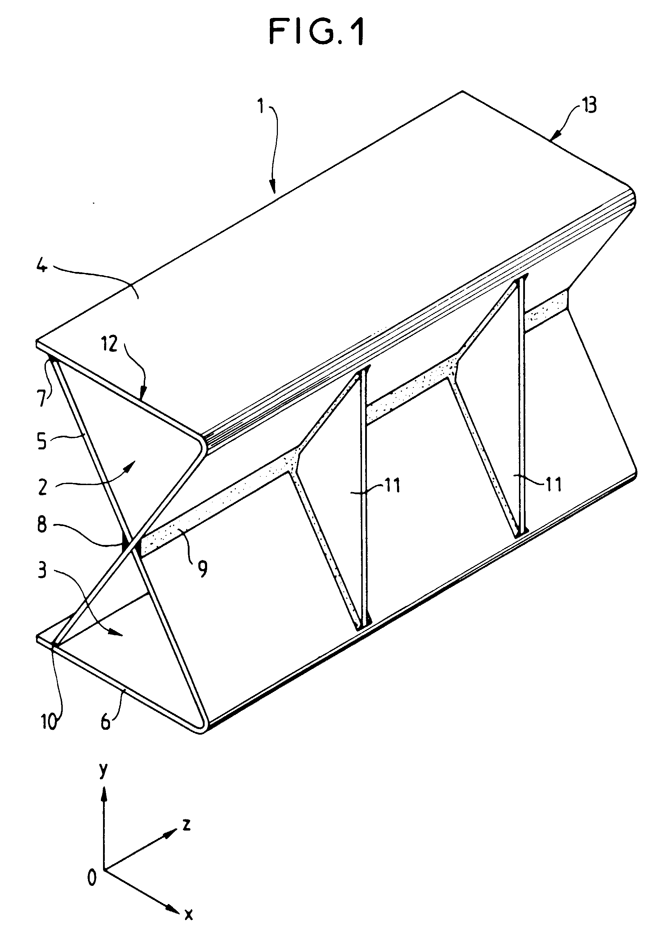

Le dispositif d'amortissement de choc représenté à la figure 1 est constitué d'un seul élément longitudinal 1 aligné dans la direction du choc Oz. Cet élément a sa section située dans le plan xOy, plan perpendiculaire à la direction du choc, qui présente la forme de deux triangles 2 et 3 ayant chacun un sommet commun. Les triangles 2 et 3 ont pour côtés des parois métalliques de l'élément 1. Les côtés des triangles peuvent être droits ou légèrement incurvés. Les angles des triangles peuvent être arrondis ou non comme le montre la figure.

L'élément 1 est réalisé en plaque mince. Dans le cas de la figure 1, il a été constitué à partir de trois plaques 4, 5 et 6 soudées ensemble par des cordons de soudure 7, 8, 9 et 10. Les plaques 4 et 6 ont été pliées de façon à former des angles pour les triangles 2 et 3.

La matière constituant les plaques minces dépend de la quantité d'énergie que le dispositif est destiné à absorber. L'acier permet l'absorption d'une grande quantité d'énergie.

L'élément 1 est réalisé en plaque mince pour que, sous l'impact d'un choc d'énergie suffisante, l'élément s'écrase en accordéon dans la direction du choc. Les essais aux chocs ont montrés que cette structure possède un comportement doublement avantageux. D'une part, elle peut s'écraser d'environ 70% de sa longueur initiale ce qui est exceptionnel. D'autre part, l'écrasement se fait sans flambage généralisé de l'élément, celui-ci s'écrasant sans déviation de direction.

L'épaisseur des plaques minces est fonction des dimensions extérieures de l'élément. Il faut que sous l'effet d'un choc, l'élément puisse s'écraser en accordéon, par flambages localisés des plaques minces. Le calcul et l'expérimentation permettent d'optimiser l'épaisseur en fonction des dimensions extérieures de l'élément pour une quantité d'énergie à absorber donnée.

Pour des raisons de symétrie, les meilleurs résultats sont obtenus pour une section d'élément comportant deux triangles identiques et opposés par leurs sommets. On peut dire, d'une autre façon, que la section a la forme d'un X fermé sur deux faces opposées.

Pour une utilisation ou lors d'un essai d'écrasement, les extrémités 12 et 13 sont soudées chacune sur une console, l'élément devant par sa déformation accumuler l'énergie engendrée par un choc. La déformation en accordéon de l'élément se réalise en conservant approximativement le gabarit de l'élément.

Des renforts locaux 11 peuvent être prévus entre les deux triangles 2 et 3, dans des plans perpendiculaires à la direction du choc. Ils sont avantageusement fixés par soudage et procurent à l'élément 1 une meilleure stabilité en torsion.

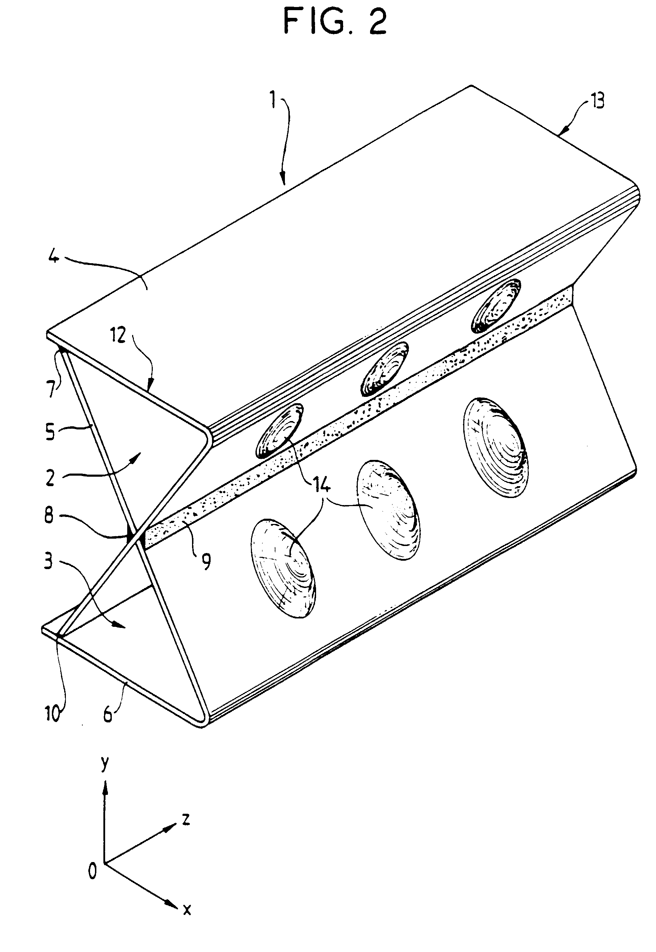

Dans la variante de réalisation représentée à la figure 2, les plaques 4, 5 et 6 sont embouties localement en des zones telles que celles référencées 14. Le calcul et l'expérimentation permettent de déterminer la forme et la position des emboutis.

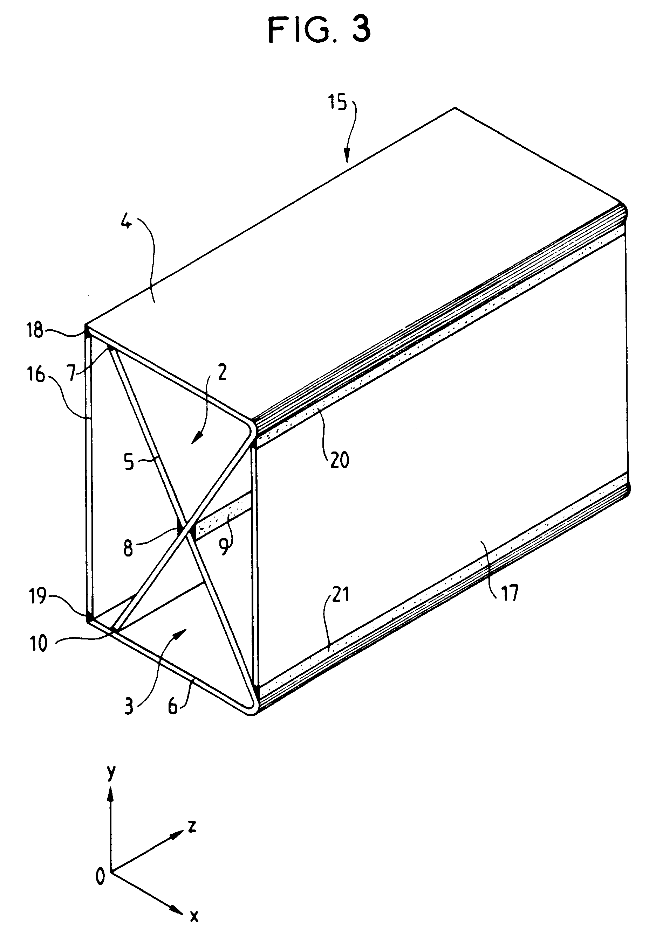

Le dispositif 15 représenté à la figure 3 est susceptible d'amortir des chocs d'énergie plus élevée que le dispositif décrit ci-dessus. La structure de base est la même que celle de la figure 1 où les mêmes éléments portent les mêmes références. Les angles entre les triangles 2 et 3 sont ici fermés par des plaques minces 16 et 17 soudées par des cordons de soudure respectivement 18, 19 et 20, 21 sur le reste de l'élément.

Lors d'un écrasement se produisant comme précédemment selon l'axe Oz, les plaques 16 et 17 forment des ondulations, le gabarit de l'élément restant approximativement le même.

Un dispositif d'amortissement peut associer plusieurs éléments tels que les éléments 1 et 15, en parallèle de façon à amortir un choc survenant sur une surface relativement grande. On peut utiliser un tel dispositif sur des véhicules ferroviaires pour amortir des chocs violents survenant en cas d'accident. Il est alors particulièrement avantageux d'intégrer ce dispositif dans un châssis de véhicule ferroviaire pour constituer une zone "fusible" en cas de choc.

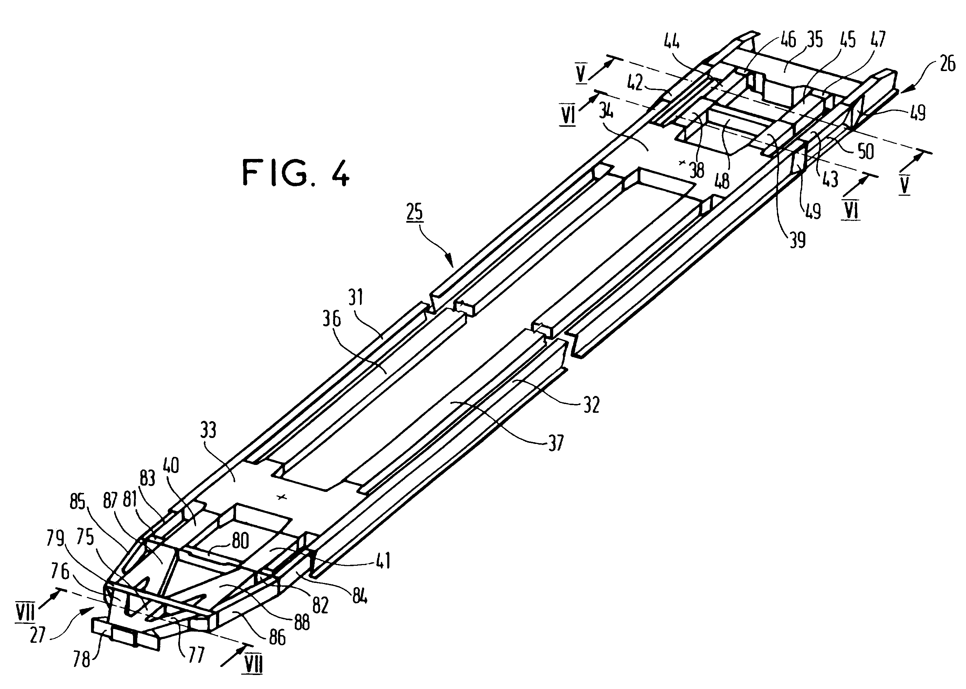

La figure 4 représente un châssis 25 de véhicule ferroviaire comportant deux dispositifs d'amortissement de choc 26 et 27 selon l'invention. Le châssis comprend deux brancards 31 et 32 entre lesquels sont disposées deux traverses pivot destinées à reposer sur des bogies: la traverse pivot avant 33 et la traverse pivot arrière 34. A l'arrière, les brancards 31 et 32 sont réunis par une traverse arrière 35. A l'avant, les brancards 31 et 32 et la traverse pivot avant 33 se prolongent par une partie avant incluant le dispositif d'amortissement 27.

Des longrines 36 et 37 réunissent les traverses pivot 33 et 34. D'autres longrines les complètent: les longrines 40 et 41 vers l'avant à partir de la traverse pivot 33.

A l'arrière, le dispositif d'amortissement de choc 26 s'intercale dans le châssis 25 entre la traverse arrière 35 et les extrémités des brancards 31, 32 et la traverse pivot 34. Le dispositif 26 comporte plusieurs éléments. Les éléments extérieurs 42 et 43 sont insérés dans les brancards 31 et 32. Les éléments intérieurs 44 et 45 prolongent les éléments 38 et 39 jusqu'à la traverse arrière 35.

Pour que les éléments absorbeurs d'énergie puissent s'écraser efficacement sous l'effet d'un choc violent, il faut que les autres constituants du châssis soient nettement moins déformables que les éléments 42, 43, 44 et 45. Des renforcements locaux de l'ossature du châssis peuvent alors être prévus.

L'espace environnant une traverse pivot étant généralement encombré, le dispositif 26 a été volontairement limité en longueur. On remarque sur la figure 4 que les éléments 42 et 43 sont plus longs que les éléments 44 et 45.

Les éléments 44 et 45 sont rendus solidaires par soudage de la traverse arrière 35 par l'intermédiaire de parties renforcées 46 et 47 s'évasant vers la traverse arrière 35. Ces parties 46 et 47 servent d'embases aux éléments 44 et 45. L'élément 44 est rendu solidaire par soudage de l'élément 38 avec interposition d'une plaque métallique servant d'embase pour l'élément 44. Il en va de même pour la liaison entre l'élément 45 et l'élément 39. Une traverse intermédiaire 48 est soudée entre les éléments 38 et 39 à proximité des éléments 44 et 45.

Les éléments 42 et 43 sont insérés par soudage aux brancards 31 et 32 avec interposition de plaques métalliques servant d'embases à ces éléments. Les brancards sont renforcés à leur jonction avec les éléments 42 et 43 par des pièces de renfort 49. Ces pièces de renfort ainsi que la proximité de la traverse pivot 34 et de la traverse arrière 35, rigidifiant les brancards, font que ces parties de brancards peuvent être considérées comme indéformables par rapport au dispositif d'amortissement.

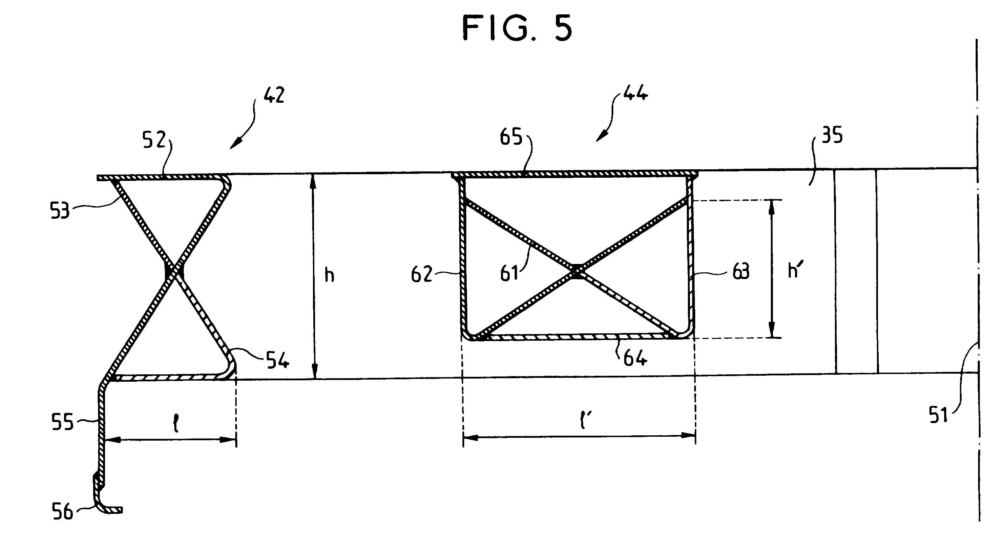

La figure 5 ne représente que la partie gauche de la coupe V-V indiquée sur la figure 4, la partie droite lui étant symétriquement identique. L'axe 51 représente l'axe central et vertical du véhicule. Les éléments 42 et 44 y sont vus en coupe. L'élément 42 est du type représenté à la figure 1. Il est formé à partir de plusieurs plaques minces 52, 53 et 54 pliées le cas échéant et soudées entre elles. Pour les besoins d'accrochage des tôles des faces latérales, il est nécessaire et non perturbant pour le système d'y adjoindre un appendice 56 situé en partie inférieure et soudé sur un prolongement 55 de la plaque 52.

L'élément 44 est du type représenté à la figure 3. Il est formé à partir de plusieurs plaques minces 61, 62, 63, 64 et 65 pliées le cas échéant et soudées entre elles. L'élément 44 a ainsi la même forme extérieure que les longrines du châssis.

Les concentrations des contraintes n'étant pas uniformes dans la section des éléments 42 et 44, il est possible de compenser ces différences de contraintes par des nuances dans les matériaux utilisés. Ainsi le châssis étant en acier à haute limite élastique (nuance E490D), les plaques 52, 53, 61, 62 et 65 peuvent être en acier de nuance E24, les plaques 63 et 64 en acier de nuance E36 et les plaques 55 et 56 en acier de nuance E490D.

A titre d'exemple, l'épaisseur des plaques peut être de 4 mm pour une hauteur h de 195 mm et une largeur l de 110 mm pour l'élément 42, et pour une hauteur h' de 130 mm et une largeur l' de 220 mm pour l'élément 44.

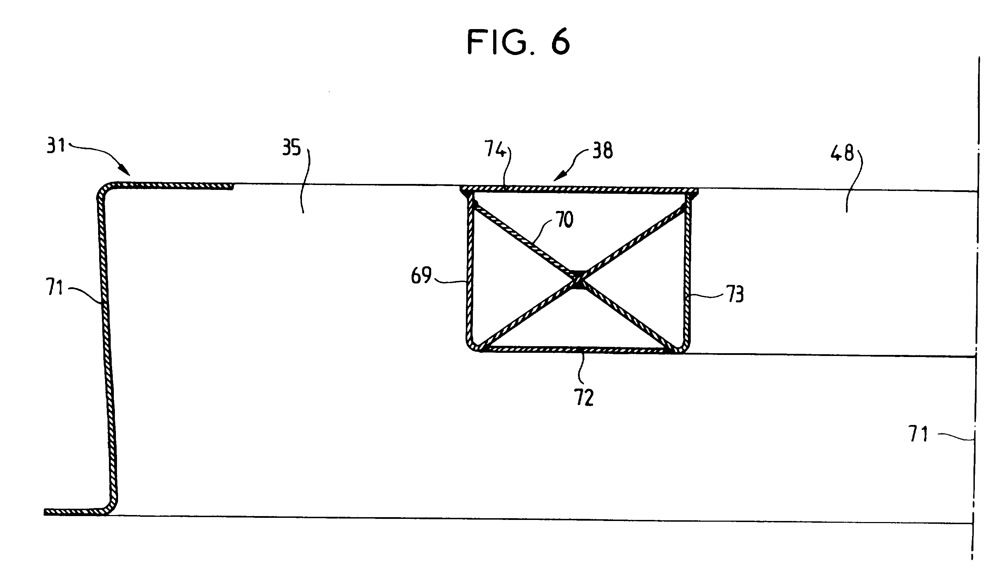

La figure 6 ne représente que la partie gauche de la coupe VI-VI indiquée sur la figure 4, la partie droite lui étant symétriquement identique. L'axe 71 représente l'axe central et vertical du véhicule. Le brancard 31 et l'élément 38 y sont vus en coupe. Le brancard 31 est formé d'une plaque 71 pliée.

L'élément 38 est constitué par soudure des plaques 69, 70, 72, 73 et 74.

A l'avant du châssis (voir figure 4), le dispositif d'amortissement de choc 27 comprend un élément central 75 placé selon l'axe central longitudinal du véhicule et deux éléments latéraux 76 et 77 disposés en V pointant vers l'avant. Ce dispositif se trouve entre une plaque d'extrémité avant 78 destinée à recevoir un choc éventuel et une traverse 79 reliée au reste du châssis par une structure mécanique rigide assurant une transmission des efforts entre la traverse 79 et la traverse pivot avant 33. Cette structure rigide comprend les longrines 40 et 41, les éléments de traverse 80, 81 et 82 et les poutres 83, 84, 85, 86, 87 et 88.

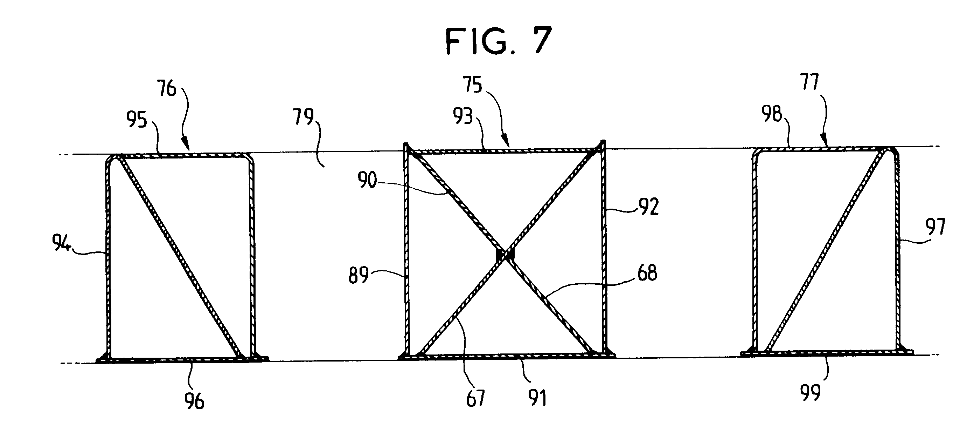

La figure 7 montre les éléments 75, 76 et 77 en coupe. L'élément 75 est du type représenté à la figure 3. Il est formé à partir de plusieurs plaques minces 89, 90,91, 92, 93, 67 et 68 soudées entre elles.

Les éléments 76 et 77 ne possèdent pas cette structure en X caractéristique de l'invention. L'élément 76 est formé à partir de plusieurs plaques minces 94, 95 et 96 pliées le cas échéant et soudées entre elles. La plaque 94 forme une diagonale pour le rectangle que forme la section de l'élément 76. Cette diagonale va du côté gauche en haut vers le côté droit en bas.

L'élément 77 est formé à partir de plusieurs plaques minces 97, 98 et 99 pliées le cas échéant et soudées entre elles. La plaque 97 forme une diagonale pour le rectangle que forme la section de l'élément 77. Cette diagonale va du côté droit en haut vers le côté gauche en bas.

Il entre également dans le cadre de la présente invention de réaliser le dispositif d'amortissement de choc par profilage et étirage.

## Revendications

1. Dispositif d'amortissement de choc, comprenant au moins un élément mécanique (1) absorbant par sa déformation l'énergie engendrée par un choc se produisant selon une direction donnée, caractérisé en ce que ledit élément est constitué de plaques minces (4, 5, 6) dont les normales sont perpendiculaires à la direction du choc, sa section située dans un plan perpendiculaire à la direction du choc ayant la forme d'au moins deux triangles (2, 3) ayant chacun un sommet commun, et en ce que l'épaisseur des plaques (4, 5, 6) est calculée de manière à ce que sous l'effet d'un choc l'élément (1) s'écrase en accordéon par flambage localisé des plaques (4, 5, 6).

2. Dispositif selon la revendication 1, caractérisé en ce que ledit élément comporte des renforts (11) disposés entre les deux triangles et dans des plans perpendiculaires à la direction du choc.

3. Dispositif selon la revendication 1, caractérisé en ce que ledit élément comporte des zones embouties (14).

4. Dispositif selon l'une quelconque des revendications 1 à 3, caractérisé en ce que les deux triangles (1, 2) sont des triangles identiques et opposés par leurs sommets.

5. Dispositif selon l'une quelconque des revendications 1 à 4, caractérisé en ce que ledit élément (15) comporte des plaques minces (16, 17) de fermeture des angles compris entre les deux triangles (2, 3).

6. Dispositif selon l'une quelconque des revendications 1 à 5, caractérisé en ce que ledit élément est en acier.

7. Dispositif selon l'une quelconque des revendications 1 à 6, caractérisé en ce que ladite section présente des parties ayant des coefficients de limite élastique différents.

8. Dispositif selon l'une quelconque des revendications 1 à 7, caractérisé en ce que ledit élément est constitué de plaques minces pliées et soudées entre elles pour former ladite section.

9. Véhicule, caractérisé en ce qu'il comporte dans son ossature au moins un dispositif d'amortissement de choc selon l'une quelconque des revendications 1 à 8, le dispositif étant placé entre des parties indéformables de l'ossature.

10. Véhicule selon la revendication 9, caractérisé en ce que le dispositif est inséré dans le châssis (25) du véhicule.

11. Véhicule selon la revendication 10, caractérisé en ce que, le châssis (25) comprenant des brancards (31, 32) et des longrines (36, 37), le dispositif comprend des éléments (38, 39, 42, 43, 44, 45) se substituant aux brancards et aux longrines du châssis.

12. Véhicule selon l'une quelconque des revendications 9 à 11, caractérisé en ce que le châssis (25) inclut un dispositif d'amortissement de choc (27) à l'avant du véhicule, ce dispositif comprenant un élément central (75) placé selon l'axe du véhicule et deux éléments latéraux (76, 77) disposés pour former un V pointant vers l'avant du véhicule.

13. Véhicule selon la revendication 12, caractérisé en ce que les éléments latéraux (76, 77) ont des sections transversales en forme de rectangle creux à une seule diagonale.

14. Véhicule selon l'une quelconque des revendications 10 à 13, caractérisé en ce que, le véhicule étant un véhicule ferroviaire possèdant une traverse arrière (35) et une traverse pivot (34) correspondant au bogie adjacent, le dispositif est inséré dans le châssis (25) entre la traverse arrière et ladite traverse pivot.

## Patentansprüche

1. Stoßdämpfervorrichtung, die mindestens ein mechanisches Element (1) aufweist, das durch seine Verformung die durch einen Stoß in einer gegebenen Richtung erzeugte Energie absorbiert, dadurch gekennzeichnet, daß das Element aus dünnen Platten (4, 5, 6) besteht, deren Senkrechte auf ihren Flächen senkrecht zur Stoßrichtung liegen, daß sein Querschnitt in einer Ebene senkrecht zur Stoßrichtung die Form von mindestens zwei Dreiecken (2, 3) aufweist, die eine gemeinsame Spitze haben, und daß die Dicke der Platten (4, 5, 6) so berechnet ist, daß das Element (1) sich unter der Einwirkung eines Stoßes durch lokalisiertes Knicken der Platten (4, 5, 6) ziehharmonikaförmig zusammenfaltet.

2. Vorrichtung nach Anspruch 1, dadurch gekennzeichnet, daß das Element Verstärkungen (11) aufweist, die zwischen den beiden Dreiecken und in Ebenen senkrecht zur Stoßrichtung angeordnet sind.

3. Vorrichtung nach Anspruch 1, dadurch gekennzeichnet, daß das Element vertiefte Bereiche (14) aufweist.

4. Vorrichtung nach einem beliebigen der Ansprüche 1 bis 3, dadurch gekennzeichnet, daß die beiden Dreiecke (1, 2) identische Dreiecke sind, deren Spitzen aneinanderstoßen.

5. Vorrichtung nach einem beliebigen der Ansprüche 1 bis 4, dadurch gekennzeichnet, daß das Element (15) dünne Platten (16, 17) zum Verschließen der Winkel zwischen den beiden Dreiecken (1, 2) aufweist.

6. Vorrichtung nach einem beliebigen der Ansprüche 1 bis 5, dadurch gekennzeichnet, daß das Element aus Stahl ist.

7. Vorrichtung nach einem beliebigen der Ansprüche 1 bis 6, dadurch gekennzeichnet, daß der Querschnitt Bereiche mit unterschiedlichen Koeffizienten der Elastizitätsgrenze aufweist.

8. Vorrichtung nach einem beliebigen der Ansprüche 1 bis 7, dadurch gekennzeichnet, daß das Element aus dünnen Platten besteht, die gefaltet und zusammengeschweißt sind, um miteinander den Querschnitt zu bilden.

9. Fahrzeug, dadurch gekennzeichnet, daß es in seinem Gestell mindestens eine Stoßdämpfervorrichtung gemäß einem der Ansprüche 1 bis 8 aufweist, wobei die Vorrichtung zwischen unverformbaren Teilen des Gestells angeordnet ist.

10. Fahrzeug nach Anspruch 9, dadurch gekennzeichnet, daß die Vorrichtung in das Chassis (25) des Fahrzeugs eingefügt ist.

11. Fahrzeug nach Anspruch 10, dadurch gekennzeichnet, daß wenn das Chassis (25) Rahmenwangen (31, 32) und Längsträger (36, 37) aufweist, die Vorrichtung Elemente (38, 39, 42, 43, 44, 45) enthält, die deren Stelle einnehmen.

12. Fahrzeug nach einem beliebigen der Ansprüche 9 bis 11, dadurch gekennzeichnet, daß das Chassis (25) im vorderen Bereich des Fahrzeugs eine Stoßdämpfervorrichtung (27) aufweist, wobei diese Vorrichtung ein zentrales Element (75)s entlang der Achse des Fahrzeugs und zwei seitliche Elemente (76, 77) besitzt, die so angeordnet sind, daß sie ein V bilden, dessen Spitze zum vorderen Bereich des Fahrzeugs zeigt.

13. Fahrzeug nach Anspruch 12, dadurch gekennzeichnet, daß die Seitenelemente (76, 77) Querschnitte in Form eines hohlen Rechtecks mit einer einzigen Diagonale aufweisen.

14. Fahrzeug nach einem beliebigen der Ansprüche 10 bis 13, dadurch gekennzeichnet, daß, wenn das Fahrzeug ein Schienenfahrzeug mit einer hinteren Traverse (35) und einem Drehschemel (34) entsprechend dem benachbarten Drehgestell ist, die Vorrichtung in das Chassis (25) zwischen die hintere Traverse und den Drehschemel eingefügt ist.

## Claims

1. An impact-absorber device comprising at least one mechanical member (1) absorbing by deformation the energy generated by an impact in a given direction characterized in that said member is made from thin plates (4, 5, 6) having normals perpendicular to the direction of impact, and having a cross-section in a plane perpendicular to the direction of impact in the shape of at least two triangles (2, 3) each having a common vertex, and in that the thickness of the plates (4, 5, 6) is calculated so that under the effect of an impact, the member (1) collapses concertina fashion by localized buckling of the plates (4, 5, 6).

2. A device according to claim 1 characterized in that said member has strengthening members (11) disposed between the two triangles and in planes perpendicular to the direction of impact.

3. A device according to claim 1 characterized in that said member has stamped areas (14).

4. A device according to any one of claims 1 to 3 characterized in that the two triangles (1, 2) are identical and face in opposite directions.

5. A device according to any one of claims 1 to 4 characterized in that said member (15) includes thin plates (16, 17) closing the inside corners between the two triangles (2, 3).

6. A device according to any one of claims 1 to 5 characterized in that said member is made of steel.

7. A device according to any one of claims 1 to 6 characterized in that said cross-section has parts with different yield stresses.

8. A device according to any one of claims 1 to 7 characterized in that said member is made from thin plates bent and welded together to form said cross-section.

9. A vehicle characterized in that it includes in its framework at least one impact-absorber device according to any one of claims 1 to 8 placed between undeformable parts of the framework.

10. A vehicle according to claim 9 characterized in that the device is inserted into the chassis (25) of the vehicle.

11. A vehicle according to claim 10 characterized in that, the chassis (25) comprising side sills (31, 32) and sole bars (36, 37), the device comprises members (38, 39, 42, 43, 44, 45) substituted for the side sills and the sole bars of the chassis.

12. A vehicle according to any one of claims 9 to 11 characterized in that the chassis (25) includes an impact-absorber device (27) at the front of the vehicle, this device comprising a central member (75) on the vehicle axis and two lateral members (76, 77) disposed to form a V-shape pointing towards the front of the vehicle.

13. A vehicle according to claim 12 characterized in that the lateral members (76, 77) have hollow rectangular transverse cross-sections with a single diagonal.

14. A vehicle according to any one of claims 10 to 13 characterized in that, being a rail vehicle having a rear crossbeam (35) and a pivot beam (34) corresponding to the adjacent bogie, the device is inserted into the chassis (25) between the rear crossbeam and said pivot beam.
